# DEMANDE DE BREVET EUROPEEN

(11) **EP 1 187 465 A1**
(43) Date de publication de la demande: **13.03.2002**
(21) Numéro de dépôt: 01000418.2
(22) Date de dépôt: 04.09.2001
(51) Int. Cl.: H04N 5/00

(54) **Décodeur de télévision numérique avec disque dur amovible et procédé de mise en service d'un disque dur amovible**

(30) Priorité: 07.09.2000 FR 0011433
(71) Demandeur: SAGEM S.A., 75015 Paris (FR)
(72) Inventeur: Cummings, John, 78600 Maisons-Laffitte (FR); Poggi, Philippe, 75016 PARIS (FR)
(74) Mandataire: Schmit, Christian Norbert Marie

(57) **Abrégé**

L'invention concerne un décodeur de télévision numérique (100) permettant d'accéder à un ensemble de fonctionnalités complexes au sein du décodeur tout en assurant un coût de fabrication initial du décodeur raisonnable. A cet effet, le décodeur (100) selon l'invention laisse la possibilité à un utilisateur d'ajouter dans le décodeur (100), de façon simple, un module de mémoire amovible et optionnel (105) de grande capacité, de type disque dur. L'invention propose en outre différents types de fonctionnement du décodeur en fonction de l'absence ou de la présence du disque dur amovible.

## Description

La présente invention a pour objet un décodeur de télévision numérique avec un disque dur amovible. Elle a également pour objet un procédé de mise en service de ce disque dur amovible. Plus particulièrement, l'invention concerne un décodeur de télévision numérique qui est susceptible de recevoir un module de mémoire supplémentaire optionnel de grande capacité dans une cavité spécifique facilement accessible. D'une façon générale, le domaine de l'invention est celui de la télévision numérique. Les différents objectifs de l'invention sont d'une part de permettre aux opérateurs de télévision de réduire le coût de fabrication des décodeurs qu'ils louent à des utilisateurs, et d'autre part d'offrir la possibilité aux utilisateurs de décodeurs d'améliorer facilement les capacités de leur décodeur et d'en étendre les fonctionnalités.

Dans le domaine de la télévision numérique, des décodeurs de télévision numérique sont utilisés, notamment afin d'accéder à un ensemble de chaînes de télévision cryptées. Les décodeurs de télévision sont des organes interfaces entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques. Les moyens de transmission qui transmettent les émissions de télévision à ces décodeurs/récepteurs sont soit des moyens de transmission aériens classiques (dans des bandes de fréquence à l'émission de 17 à 862 MHz), soit des câbles coaxiaux (dans des bandes de fréquence à l'émission de 110 à 862 MHz), voire optiques, soit des satellites de réemission qui desservent une région (dans des bandes de fréquence à l'émission de 10,3 à 12,8 GHz).

Typiquement, le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran. Habituellement, les décodeurs de télévision numériques sont mis à disposition des utilisateurs abonnés par des opérateurs de télévision qui diffusent un ensemble de services appelé bouquet numérique. Ces opérateurs louent ainsi un appareil qui permet à un abonné d'une part de recevoir et de décrypter un ensemble de signaux télévisuels correspondant aux différents services de télévision qui constituent le bouquet numérique de l'opérateur considéré, et d'autre part de recevoir un ensemble de signaux de fonctionnement qui permettent au décodeur de réaliser les différentes opérations de décryptage et éventuellement de mettre à jour et/ou de déclencher certaines fonctionnalités du décodeur. Les utilisateurs abonnés à un opérateur étant de plus en plus nombreux, ces opérateurs doivent disposer d'un nombre constamment croissant de décodeurs à louer aux abonnés. Ces opérateurs cherchent donc à limiter le plus possible le coût de fabrication des décodeurs.

Cependant, parallèlement à cet aspect économique, les opérateurs proposent en permanence de plus en plus de nouvelles fonctionnalités qui peuvent être mises en oeuvre au moyen du décodeur pour rendre toujours plus attractif son utilisation. Par exemple, certains opérateurs proposent aujourd'hui une fonctionnalité de vidéo différée, une fonctionnalité de création d'image mosaïque ou encore différentes fonctionnalités d'enregistrement de programmes de télévision au sein même du décodeur de télévision numérique. Ces nouvelles fonctionnalités requièrent en outre la présence d'un ou plusieurs modules de mémoire de grande capacité de type disque dur. Or ces éléments sont excessivement coûteux et alourdissent en conséquence considérablement le prix de fabrication d'un décodeur.

Le décodeur de télévision numérique selon l'invention permet de pallier l'ensemble des problèmes qui viennent d'être exposés. En effet, le décodeur de télévision numérique selon l'invention permet d'accéder à un ensemble de fonctionnalités complexes du décodeur, qui nécessitent en conséquence un espace de mémoire important, tout en assurant un coût de fabrication raisonnable du décodeur initial. A cet effet, le décodeur selon l'invention laisse la possibilité à un utilisateur d'ajouter au sein du décodeur, de façon simple, un module de mémoire amovible et optionnel de grande capacité, de type disque dur. Ce module de mémoire amovible est, de préférence, la seule mémoire de grande capacité présente dans le décodeur lorsqu'elle y est introduite. En d'autres termes, il n'existe pas de module de mémoire de grande capacité au sein du décodeur tant que le disque dur amovible n'a pas été introduit.

En conséquence, le coût du disque dur n'est plus supporté par l'opérateur de télévision, mais par l'utilisateur du décodeur qui souhaite accéder aux fonctionnalités complexes proposées par l'opérateur. Ainsi, dans le décodeur de télévision numérique selon l'invention, un fonctionnement minimal, assurant notamment les principales fonctions de décryptage de services de télévision, est assuré à l'aide du décodeur tel que loué par l'opérateur à un utilisateur. Par l'ajout d'un module de mémoire optionnel de grande capacité, l'utilisateur obtient le droit et la possibilité d'accéder à des fonctionnalités plus complexes qui peuvent être proposées par l'opérateur, mais auxquelles l'utilisateur ne peut accéder sans la présence de ce module de mémoire supplémentaire dans le décodeur. Le module de mémoire supplémentaire est donc dit optionnel dans le sens où sa présence n'est pas indispensable à un fonctionnement minimal du décodeur dans lequel il peut être inséré. Par ailleurs, ce module de mémoire optionnel est vierge ; il ne comporte pas, de préférence, d'applications supplémentaires destinées au fonctionnement du décodeur dans lequel il est introduit.

L'invention propose en outre différents types de fonctionnement du décodeur en fonction de l'absence ou de la présence du disque dur amovible. Différentes caractéristiques mécaniques peuvent rendre l'introduction et/ou l'extraction du disque dur amovible facilitée pour l'utilisateur. Un ensemble de caractéristiques électroniques sont également proposées pour gérer le fonctionnement du décodeur en présence et en absence du disque dur amovible.

L'invention concerne donc notamment un décodeur de télévision numérique contenu dans un boîtier comportant notamment un module de réception d'un ensemble de flux de signaux télévisuels, une mémoire de programmes contenant en outre un premier système d'exploitation, caractérisé en ce que le boîtier comporte une cavité pour pouvoir recevoir directement un module de mémoire optionnel amovible de grande capacité de type disque dur, des moyens pour détecter automatiquement la présence du module de mémoire optionnel amovible et des moyens pour mettre à jour le premier système d'exploitation suite à la détection de la présence du module de mémoire optionnel amovible.

Dans un mode de réalisation préféré de l'invention, le module de mémoire optionnel amovible est inséré dans un fourreau pour être introduit dans la cavité, ce fourreau comportant sur une face une carte d'adaptation venant se brancher sur un connecteur du décodeur, le connecteur du décodeur n'étant pas normalisé. Le fourreau peut par ailleurs être équipé d'une poignée disposée sur une autre face opposée à la première face afin de faciliter l'extraction du module de mémoire amovible contenu dans le fourreau. Afin de guider la réception du module de mémoire amovible, deux réglettes sont disposées dans la cavité, au moins une des réglettes étant munie d'un creux pour bloquer un ergot disposé sur une troisième face du fourreau.

Différents moyens sont mis en oeuvre au sein du décodeur selon l'invention pour gérer son fonctionnement avec et/ou sans module de mémoire amovible :
- des moyens pour télécharger le deuxième système d'exploitation ;
- des moyens pour transférer une partie ou la totalité du premier système d'exploitation et/ou du deuxième système d'exploitation dans le module de mémoire optionnel de grande capacité ;
- des moyens pour apparier le décodeur et le module de mémoire optionnel de grande capacité.

La présente invention concerne également un procédé de mise en service d'un module de mémoire optionnel amovible à grande capacité, de type disque dur, au sein d'un décodeur de télévision numérique caractérisé en ce qu'il comporte les étapes consistant à :
- insérer le module de mémoire optionnel amovible de grande capacité dans un fourreau ;
- introduire le fourreau dans une cavité spécifique du décodeur ;
- détecter au moyen d'un premier système d'exploitation contenu dans une mémoire de programmes du décodeur l'étape d'introduction du fourreau ;
- mettre à jour le premier système d'exploitation.

Les étapes supplémentaires suivantes peuvent être ajoutées dans le procédé selon l'invention :
- télécharger un deuxième système d'exploitation, et transférer une partie ou la totalité du premier système d'exploitation et/ou du deuxième système d'exploitation dans le module de mémoire optionnel de grande capacité afin de réaliser la mise à jour du premier système d'exploitation;
- appariement du décodeur et du module de mémoire optionnel de grande capacité ;
- opération consistant à connecter, au cours de l'étape d'introduction du module de mémoire optionnel amovible, une carte d'adaptation disposée sur une première face du fourreau avec un connecteur non normalisé du décodeur.

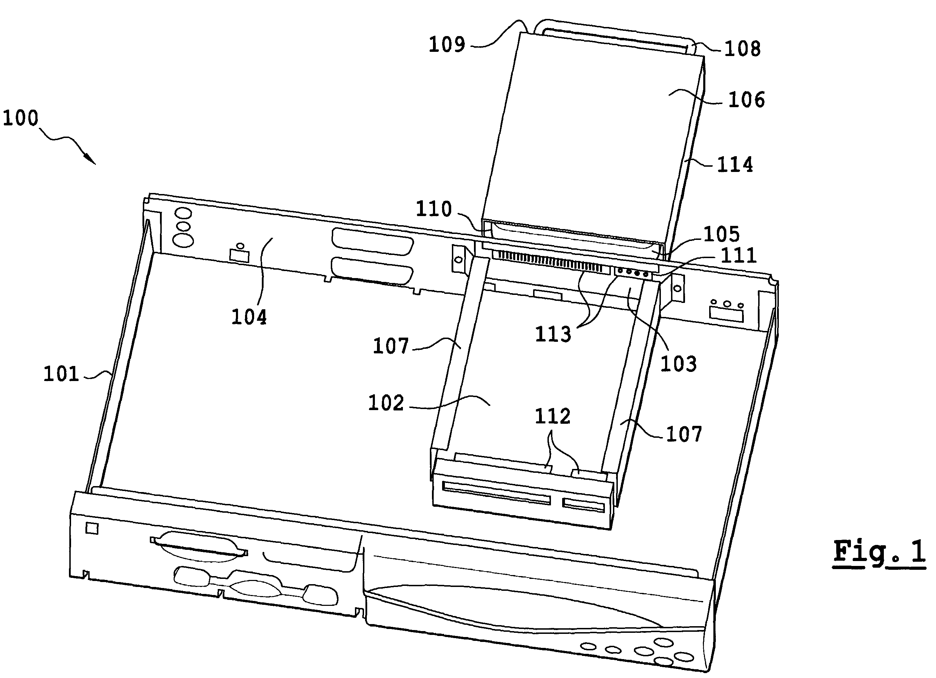

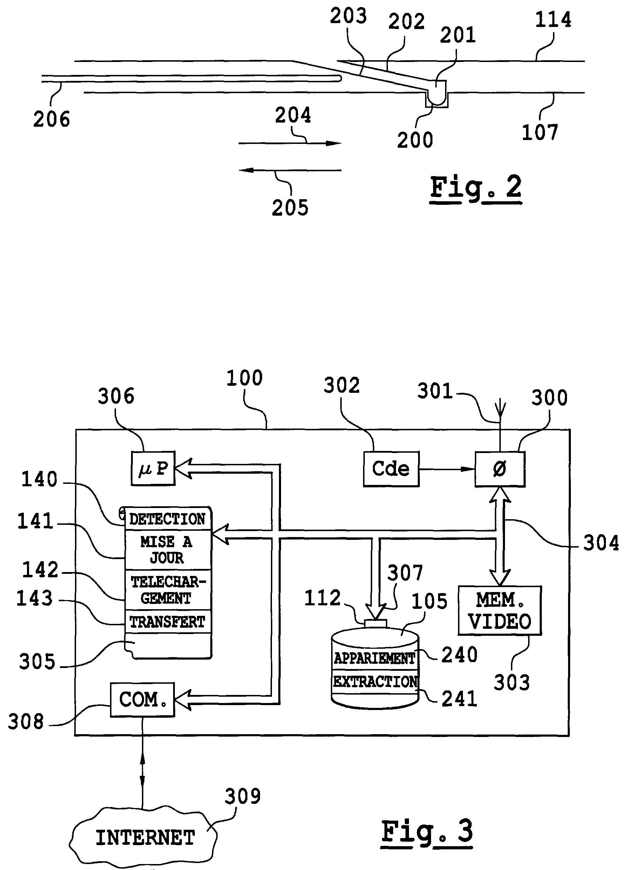

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- A la figure 1, une représentation simplifiée du décodeur selon l'invention ;
- A la figure 2, une représentation d'une caractéristique mécanique facilitant l'introduction et l'extraction du disque dur ;
- A la figure 3, une représentation schématique des différents éléments intervenant dans le fonctionnement du décodeur selon l'invention.

A la figure 1, un décodeur de télévision numérique 100 est contenu dans un boîtier 101 comportant notamment une cavité 102. La cavité 102 comporte une ouverture 103 sur la face arrière 104 du décodeur. L'ouverture 103 pourrait se situer sur une autre face du décodeur de télévision numérique. Cependant, les opérations d'insertion et/ou d'extraction d'un module de mémoire optionnel amovible 105, qui sera désigné dans la suite de la description comme disque dur amovible, ne sont pas fréquentes et la présentation de l'ouverture 103 sur la face arrière 104 apparaît comme la plus esthétique tout en demeurant facilement accessible. Le disque dur amovible 105, contenu dans un fourreau 106 est susceptible d'être inséré dans la cavité 102. A cet effet, des réglettes 107 sont disposées dans la cavité de façon à orienter, à guider, le mouvement d'introduction et/ou d'extraction du disque dur contenu dans son fourreau 106. Une poignée 108 est présente sur une première face, dite face arrière 109, du fourreau 106 notamment pour permettre l'extraction du disque dur amovible 105 dans son fourreau 106. Cette poignée peut cependant être également utilisée pour l'opération d'insertion. Sa présence permet notamment d'insérer totalement le disque dur au sein du décodeur, sans laisser une partie de ce dernier dépasser.

Une deuxième face, dite face avant, 110 du fourreau 106, opposée à la face arrière 109, comporte notamment une carte d'adaptation 111. Cette carte d'adaptation 111 assure la connexion entre le disque dur amovible 105 et un connecteur 112 du décodeur. Dans un mode de réalisation préféré, le connecteur 112 du décodeur n'est pas normalisé, et ces différents points de connexion ne correspondent notamment pas à la norme IDE. Ainsi, la carte d'adaptation 110 doit comporter d'une part sur une première face directement en contact avec le disque dur amovible 105 un dispositif de connexion normalisé pour pouvoir effectuer des opérations d'écriture et de lecture de disque dur amovible 105, et d'autre part sur une deuxième face qui vient se connecter au connecteur 112, un deuxième dispositif de connexion 113 adéquat pour ce branchement. Ainsi, un fourreau spécifique, disposant de la carte d'adaptation 111, permet l'introduction d'un disque dur amovible au sein du décodeur 100. Ces fourreaux peuvent être vendus avec le disque dur amovible.

A la figure 2, un exemple de système mécanique permettant de bloquer le fourreau 106 dans la cavité 102 est représenté. Sur cette figure, une des réglettes 107 présente un trou 200 qui est susceptible de recevoir une tête 201 formant saillie d'une languette 202 disposée sur une troisième face 114, qui est une des faces latérales du fourreau 106. La languette 202 est disposée sur cette face latérale 114 en étant fixée au niveau d'une de ses extrémités 203 de telle sorte que la tête 201 descende automatiquement dans le trou 200 lorsque le fourreau est inséré selon une direction et un sens d'insertion 204 le long de réglettes 107, la tête 201 constituant ainsi un ergot. La forme de la tête 201 de languette 202 et du trou 200 sont telles que lorsqu'un utilisateur tente d'extraire le disque dur 105 contenu dans le fourreau 106 par exemple au moyen de la poignée 108, selon un sens 205 d'extraction opposé au sens 204 d'insertion, le mouvement d'extraction soit bloqué. Une pince à dessertir 206 est utilisée pour repousser la tête 201 de la languette 202 hors du trou 200. Cette languette peut par exemple être livrée à l'utilisateur ayant acheté le disque dur 106. Elle est utilisée en étant glissée par l'utilisateur entre le fourreau 106 et la réglette 107 comportant le trou 200. Elle permet, par un appui sur la languette 202 de faire sortir la tête 201 hors du trou 200. Dans d'autres modes de réalisations, chacune des réglettes 107 peut comporter un trou qui reçoit une tête de languette. La caractéristique mécanique décrite sur cette figure permet de maintenir bloqué le disque dur amovible à une distance optimale pour assurer sa connexion avec un connecteur du décodeur. En ce sens, elle facilite l'introduction et l'extraction du disque dur amovible.

A la figure 3, un schéma simplifié de la structure interne du décodeur montre différents éléments intervenant dans le fonctionnement de ce décodeur, et notamment des éléments gérant la prise en compte de la présence ou de l'absence du disque dur amovible 105 dans la cavité 102. Le décodeur 100 comporte un module de réception 300 des signaux télévisuels qui reçoit via une antenne 301 un flux de signaux comprenant notamment des signaux audio et/ou vidéo émis par un opérateur de télévision. Le module de réception 300 pourrait également être connecté à un réseau de télévision câblé ou un système de réception par satellite. Par ailleurs, le module de réception 300 est connecté à un circuit de commande 302 qui transfère au module de réception 300 un signal de commande indiquant quel service il doit extraire de l'ensemble des flux reçus par l'antenne 301. Les signaux numérisés issus du module de réception 300 sont envoyés dans une mémoire vidéo 303 via un bus de communication bidirectionnel 304. Une mémoire de programmes 305 contient un premier système d'exploitation OS1. Les éléments constituant la mémoire de programmes sont le plus souvent de type mémoires flash EEPROM. Ce premier système d'exploitation gère notamment un ensemble d'applications qui permettent le fonctionnement du décodeur 100 en l'absence du disque dur amovible 105.

Un microprocesseur 306 gère notamment l'ensemble des opérations intervenant dans les différents modes de fonctionnement du décodeur, c'est à dire dans un mode avec disque dur et dans un mode sans disque dur. Le bus de communication bidirectionnel 304 peut véhiculer des signaux d'adresses, de commandes ou de données. Il assure ainsi le transfert d'information entre le module de réception 300, la mémoire de programmes 305 et le microprocesseur 306. Par ailleurs, une extrémité 307, utilisée comme interface de connexion, de ce bus de communication 304 est constitué par le connecteur non normalisé 112 sur lequel vient se brancher la carte d'adaptation 111 du fourreau 106 contenant le disque dur amovible 105. Le décodeur comporte de nombreux autres éléments, notamment des capteurs infrarouges pour gérer l'interface homme-machine entre le décodeur et un utilisateur au moyen d'une télécommande, et pour permettre l'affichage et le décryptage des signaux reçus qui ne sont pas représentés ici car ils n'apportent rien à l'invention.

Lorsqu'un disque dur amovible 105, contenu dans son fourreau 106, est introduit dans la cavité 102, le fonctionnement du décodeur selon l'invention est le suivant :

Une application 140, dite application de détection du disque dur amovible, gérée par le premier système d'exploitation OS1 permet de déterminer si un disque dur amovible 105 est connecté au bus 304 au niveau de l'extrémité 307 de ce bus. Lorsqu'un disque dur amovible 105 est effectivement présent, une application 141 du système d'exploitation OS1, dite application de mise à jour du premier système d'exploitation OS1, peut être déclenchée automatiquement ou suite à une instruction émise par l'utilisateur. L'application de mise à jour du premier système d'exploitation 141 à pour effet de mettre en oeuvre une application 142, dite application de téléchargement, du premier système d'exploitation OS1. Cette application 142 de téléchargement permet de rapatrier au sein du décodeur 100 des données relatives à des nouvelles applications. Le premier système d'exploitation OS1 peut ainsi être complété pour constituer un deuxième système d'exploitation OS2. Une autre façon de présenter les choses est de considérer que l'ensemble des nouvelles applications téléchargées constitue un deuxième système d'exploitation OS2, qui coexiste avec le premier système d'exploitation OS1.

Afin de limiter le coût de fabrication du décodeur 100, les mémoires de type flash EEPROM contenant le premier système d'exploitation OS1 sont en nombre limité, par exemple à une capacité de mémoire de deux Mega-octets. Aussi l'application du mise à jour du premier système d'exploitation 141 met-elle en oeuvre une application 143, dite application de transfert, gérée par le premier système d'exploitation OS1 afin de transférer une partie ou la totalité des applications contenues dans le premier système d'exploitation OS1 et/ou dans le premier système d'exploitation OS2 vers le disque dur amovible 105 qui a été introduit.

Inversement, lorsqu'un disque dur amovible 105, contenu dans son fourreau 106, est retiré de la cavité 102, les différentes applications qui avaient été, respectivement, téléchargées ou déplacées suite à la détection de la présence du disque dur sont, respectivement, mémorisées dans des modules de mémoire du décodeur si l'espace mémoire disponible est suffisant ou perdues dans le cas contraire, ou restituées dans les mémoires de type flash EEPROM contenant le premier système d'exploitation OS1.

Le téléchargement de données relatives aux nouvelles applications du décodeur peut être effectué soit directement à travers le flux de données arrivant au module de réception 300, ou via une interface de communication 308, par exemple connectée à un réseau de type réseau Internet 309, et qui peut échanger des données sur le bus 304. Parmi les applications qui sont téléchargées lors de la mise à jour du système d'exploitation, on trouve de nombreuses applications qui permettent de gérer le fonctionnement du disque dur 105 amovible inséré, et qui permettent de mettre en oeuvre différentes fonctionnalités le faisant intervenir. D'autres applications peuvent également être téléchargées.

Parmi ces autres applications, on trouve une application dite d'appariement 240 qui permet d'associer de façon définitive un disque dur 105 introduit dans la cavité du décodeur 100 et ce décodeur 100. Cet appariement est effectué par exemple en écrivant un code dans la mémoire du disque dur amovible, et dans une mémoire du décodeur. La fonction d'appariement pourrait également appartenir, dans d'autres modes de fonctionnement, au premier système d'exploitation OS1. Les différentes opérations de cryptage et de décryptage effectuées lors d'opérations d'écriture et/ou de lecture du disque dur amovible 105 sont alors mises en oeuvre de telle façon que seules les données contenues dans un disque dur apparié à un décodeur déterminé pourront être décryptées et visualisées en clair sur un dispositif de restitution de type téléviseur.

Lorsqu'un utilisateur souhaite extraire le disque dur 105 du décodeur 100, il doit mettre en oeuvre une application 241, dite application d'extraction, pour assurer le transfert des différentes applications du premier système d'exploitation OS1 qui se trouve éventuellement sur le disque dur 105 vers la mémoire de programmes 305. Ainsi, lorsque l'utilisateur effectue l'extraction physique de son disque dur amovible 105 du décodeur 100, le décodeur 100 peut retrouver le fonctionnement minimal qu'il possédait avant l'insertion du disque dur 105 qui repose exclusivement sur les applications du premier système d'exploitation OS1. Dans un mode de mise en oeuvre préféré du procédé selon l'invention, l'application d'extraction 241 appartient au deuxième système d'exploitation OS2 qui a été téléchargé.

## Revendications

1. Décodeur de télévision numérique (100) contenu dans un boîtier (101) comportant notamment un module de réception (300) d'un ensemble de flux de signaux télévisuels, une mémoire de programmes (305) contenant en outre un premier système d'exploitation (OS1), **caractérisé en ce que** le boîtier (101) comporte une cavité (102) pour pouvoir recevoir directement un module de mémoire optionnel amovible de grande capacité (105) de type disque dur, des moyens (140) pour détecter automatiquement la présence du module de mémoire optionnel amovible (105) et des moyens pour mettre à jour le premier système d'exploitation (OS1) suite à la détection de la présence du module de mémoire optionnel amovible (105).

2. Décodeur de télévision numérique selon la revendication précédente **caractérisé en ce qu'**il comporte des moyens (141) pour mettre en oeuvre un deuxième système d'exploitation (OS2) suite à la détection de la présence du module de mémoire optionnel amovible (105).

3. Décodeur de télévision numérique (100) selon la revendication précédente **caractérisé en ce qu'**il comporte des moyens (142 ;301; 308) pour télécharger le deuxième système d'exploitation (OS2).

4. Décodeur de télévision numérique (100) selon l'une des revendications 2 ou 3 **caractérisé en ce qu'**il comporte des moyens (143) pour transférer une partie ou la totalité du premier système d'exploitation (OS1) et/ou du deuxième système d'exploitation (OS2) dans le module de mémoire optionnel de grande capacité (105).

5. Décodeur de télévision numérique (100) selon l'une des revendications précédentes **caractérisé en ce qu'**il comporte des moyens (240) pour apparier le décodeur (100) et le module de mémoire optionnel amovible (105).

6. Décodeur de télévision numérique (100) selon l'une des revendications précédentes **caractérisé en ce que** le module de mémoire optionnel amovible (105) est inséré dans un fourreau (106) pour être introduit dans la cavité (102).

7. Décodeur de télévision numérique (100) selon la revendication précédente **caractérisé en ce que** le fourreau (106) est équipé d'une poignée (108) disposée sur une première face (109).

8. Décodeur de télévision numérique (100) selon la revendication précédente **caractérisé en ce que** le fourreau (106) comporte sur une deuxième face (110) une carte d'adaptation (111) qui vient se brancher sur un connecteur (112) du décodeur (100), le connecteur (112) du décodeur (100) n'étant pas normalisé.

9. Décodeur de télévision numérique (100) selon l'une des revendications 6 à 8 **caractérisé en ce qu'**il comporte deux réglettes (107) disposées dans la cavité (102) pour guider la réception du module de mémoire optionnel amovible (105), au moins une des réglettes (107) étant munie d'un creux (200) pour bloquer un ergot disposé sur une face latérale (114) du fourreau (106).

10. Procédé de mise en service d'un module de mémoire optionnel amovible de grande capacité (105) de type disque dur au sein d'un décodeur de télévision numérique (100) **caractérisé en ce qu'**il comporte les étapes consistant à :
- insérer le module de mémoire optionnel amovible (105) dans un fourreau (106);
- introduire le fourreau(106) dans une cavité spécifique (102) du décodeur (100);
- détecter au moyen d'un premier système d'exploitation (OS1) contenu dans une mémoire de programmes (305) du décodeur (100) l'étape d'introduction du fourreau (106) ;
- mettre à jour le premier système d'exploitation (OS1).

11. Procédé selon la revendication précédente **caractérisé en ce que** l'étape de mise à jour du premier système d'exploitation (OS1) comporte les étapes consistant à :
- télécharger un deuxième système d'exploitation (OS2);
- transférer une partie ou la totalité du premier système d'exploitation (OS1) et/ou du deuxième système d'exploitation (OS2) dans le module de mémoire optionnel amovible (105).

12. Procédé selon l'une des revendications 10 ou 11 **caractérisé en ce qu'**il comporte l'étape supplémentaire consistant à apparier le décodeur (100) et le module de mémoire optionnel amovible (105).

13. Procédé selon l'une des revendications 10 à 12 **caractérisé en ce que** l'étape d'introduction du module de mémoire optionnel amovible (105) comprend l'opération consistant à connecter une carte d'adaptation (111) disposée sur une face (110) du fourreau (106) avec un connecteur (112) non normalisé du décodeur (100).
